# EUROPEAN PATENT APPLICATION

(11) **EP 1 637 613 A1**
(43) Date of publication of application: **22.03.2006**
(21) Application number: 04022317.4
(22) Date of filing: 20.09.2004
(51) Int. Cl.: C12Q 1/68, G01N 33/543

(54) **Electrochemical patterning on multi-channel microelectrode array for biosensing applications**

(71) Applicant: Eidgenössische Technische Hochschule Zürich, 8092 Zürich (CH); Eidgenössische Materialprüfungs- und Forschungsanstalt EMPA, 8600 Dübendorf (CH)
(72) Inventor: Vörös, Janos, 8952 Schlieren (CH); Textor, Marcus, 8200 Schaffhausen (CH); Tang, Clarence, 8952 Schlieren (CH); Keller, Beat, 8124 Maur (CH)
(74) Representative: Blum, Rudolf Emil

(57) **Abstract**

Described is a method for electrochemically patterning a microelectrode array (MEA) with at least two different kinds of macromolecules. Said method comprising the steps of
- providing a platform with a surface that comprises individually addressable conductive microelectrode surfaces,
- covering said platform surface with an adlayer of resistant polymer,
- desorbing said adlayer from a first kind of conductive microelectrodes intended for the selective adsorption of a first kind of macromolecules, in particular proteins, by applying a potential,
- subjecting the desorbed surfaces to the first macromolecule under conditions such that said first macromolecule adsorbs to said desorbed surfaces, and repeating the desorption/adsorption steps with a second or further kind of macromolecules until all kinds of desired macromolecules are adsorbed. A microchip array produced by the inventive method is also described. Such chip arrays can be used to study a large diversity of biological interactions, e.g. protein-protein interactions, protein-cell interactions, protein-nucleic acid interactions etc.

## Description

The present invention concerns a novel technique to provide a biologic electrode array, in particular a chip array that includes an array of electrodes, in particular a microarray/biochip for measuring interactions of non-nucleic acid biological compounds/products with analytes and such chip as well as its use in analyt-ics.

One of the most interesting features commonly found in DNA microarrays, proteomics biochips and immunoarrays involves surface patterning which strategically integrates both surface chemistry and specific biomolecu-lar immobilization. Over the years, different bioanalyti-cal approaches towards achieving high sensitivity, spe-cific selectivity and efficient throughput, especially in the field of biosensing, have been proposed (Mirzabekov and Kolchinsky 2002) (Templin et al. 2002).

Electrochemical biosensing methods have attracted much attention and they have successfully been implemented, especially in electrophoresis and hybridization processes involving charged DNA molecules (Swanson et al. 2000).

Considering that proteins are complex three-dimensional molecules with a larger library compared to genes, huge challenges remain to elucidate the sequence and function and interactions of every encoded protein. However, hitherto there does not yet exist a suitable method and means for investigating protein involving interactions, in particular also since methods suitable for producing nucleic acid microarrays - due to the greater diversity of amino acids present in proteins and therefore the more complex protein structures - are not applicable to proteins.

The hitherto known protein chips are mechanically produced, namely by adding the protein to the desired spot by means of micro-needles or spotting.

Therefore it was the aim of the present invention to provide a means for easy investigation of protein involving interactions, and a method for producing such means.

This aim was achieved by a novel method to electrochemically pattern a microelectrode array (MEA) platform with different macromolecules, in particular proteins and vesicles according to the appended claims. This method is based on the finding that an adlayer of a below further described polymer can selectively be desorbed from a conductive microelectrode surface when it is subjected to a specific voltage. By providing a platform that is able to be selectively electrically polarized, small spots wherefrom the adlayer has been desorbed can be selectively generated. A presently preferred adlayer is a passive adlayer of protein-resistant polymer, in particular poly(L-lysine)-grafted-poly(ethylene glycol) (PLL-g-PEG) that desorbs from an also presently preferred indium tin oxide (ITO) microelectrode suitable for selective electrical polarization at +1800 mV (reference to silver electrode). Subsequent to the desorption of the adlayer, probes of interest may be immobilized on the adlayer-free (also termed "bare") microelectrode surfaces. Suitable probes comprise different macromolecules, whereby the term macromolecules as used herein e.g. comprises proteins, DNA/RNA, carbohydrates, vesicles, but also cells, cell parts and combinations thereof. Probes of interest are in particular probes selected from the group comprising proteins, carbohydrates, vesicles, cells and combinations thereof, more preferred proteins and/or vesicles. Said macromolecules may optionally be fluorescent-labeled. Usually one adlayer free area is provided with one type of macromolecules, however, for specific applications also combinations of different types of macromolecules can be adsorbed. Probes may interact with target molecules due to their structure, e.g. folding, or they may carry at least one functional group. Since a functional group may e.g. be present due to the presence of a specific amino acid in a protein or may synthetically be introduced, all molecules carrying at least one functional group, irrespective of the origin of the functional group, herein are referred to as being functionalized. A preferred location of a functional group in many molecules is at the end. Macromolecules carrying such a group, optionally together with further functional groups, are termed end-functionalized macromolecules. Presently preferred functional groups include e.g. the following groups: hydroxy (-OH), carboxy (-COOH), ester (-COOR), thiol (-SH), N-hydroxy-succinimidyl, maleimidyl, vinylsulfone, biotin, nitrilo triacetic acid, peptide or other reactive groups that are suited for further functionalization with biospecific molecular moieties.

By optimizing the capabilities of electronic multiplexing and simple surface chemistry to capture or release specific biomolecules, the feasibility of extending an electrochemical control towards biosensors could be demonstrated.

More detailed, a preferred embodiment of the present invention is a patterned surface consisting of an array of electrically conductive indium tin oxide (ITO) microelectrodes, surrounded by an insulating silicon oxide (SiO₂) background. An adlayer of a passive protein-resistant polymer, e.g. an optionally fluorescent-labeled polycationic protein-resistant polymer such as poly(L-lysine)-grafted-poly(ethylene glycol) (PLL-g-PEG) is used as a passive backfill by uniformly adsorbing it onto the surface of the array at open circuit potential. Selected ITO microelectrodes can then be individually electronically activated using a standard potentiostat via a multi-channel control unit.

In the case of electrically conductive indium tin oxide (ITO) microelectrodes, surrounded by an insulating silicon oxide (SiO₂) background and an adlayer of fluorescently labeled PLL-g-PEG/633, Confocal Laser Scanning Microscopy (CLSM) images revealed that an external electrical polarization at +1800 mV (reference to silver electrode) results in the electrochemical desorption of the PLL-g-PEG/633 adlayer from the selected ITO microelectrodes, without affecting the passive backfill on the unpolarized ITO and the insulating SiO₂. Subsequently the electronically activated microelectrodes can be surface functionalized with different macromolecules such as optionally functionalized (in particular end-functionalized) polymers, optionally fluorescent-labeled proteins and/or optionally fluorescent-labeled vesicles. The electronically activated ITO microelectrodes are not destroyed at +1800 mV since they could be passivated again with another adlayer such as PLL-g-PEG/633. This repassivation allows for subsequent method steps involving similar electrochemical desorption and surface functionalization. The high selectivity to electrochemically address a localized microelectrode within an array thereby enabling specific surface functionalization with different probes and immobilization techniques, allows to produce electrochemical biosensors and means for use in immunoarrays applications. The invention is further described below. Said further description comprises non-limiting examples that are illustrated by Figures.
**Fig. 1** is a phase contrast image of an Ayanda Biosystems microelectrode array (MEA) consisting of 60 indium tin oxide microelectrodes. Each electrode measures 40 *µ*m in diameter.
**Fig. 2** is a confocal image showing the uniform adsorption of PLL-g-PEG/633 onto the microelectrode array at open circuit potential. A photo-bleached region revealed the background signal of the underlying platform.
**Fig. 3** shows that an applied voltage at +1800 mV (referenced to silver electrode) on the first of three selected ITO microelectrodes desorbed the protein-resistant polymer from its surface. The signal intensity on the electronically activated microelectrodes was observed to be lower than that of the photo-bleached region.
**Fig. 4** is a similar image to Figure 3, showing the desorption on the first of three selected ITO microelectrodes (in a sequential order from left to right)due to an applied voltage at +1800 mV (referenced to silver electrode).
**Fig. 5** is a similar image to Figures 3 and 4, showing the desorption on all three selected ITO microelectrodes.
**Fig. 6** shows a microelectrode array that was uniformly exposed to PLL-g-PEG/633 at open circuit potential for 60 min and rinsed with HEPES 2 solution.
**Fig. 7** shows that an external electrical polarization at +1800 mV (reference to silver electrode) on the selected ITO microelectrodes removed the protein-resistant adlayer completely from its surfaces.
**Fig. 8** shows the microelectrode array after exposure to PLL-g-PEG/488 for 60 min. with the PLL-g-PEG/488 covering the bare and electronically activated ITO.
**Fig. 9** shows in 5 times magnification a confocal microscopy image of an array with the biotinylated polymer, PLL-g-PEG/PEGbiotin as a backfill, spots, wherein the original adlayer has been removed and replaced by fluorescent-labeled human fibrinogen on a selected region of microelectrodes, whereafter the array has been subjected to fluorescent-labeled streptavidin which has a strong binding affinity to biotin resulting in adsorption over the whole still PLL-g-PEG/PEGbiotin covered surface.
**Fig. 10** shows the same array as Figure 9 but in 40 times magnification.
**Fig. 11** shows a microelectrode array with PLL-g-PEG/633 adsorbed on its surface and with a photo bleached spot near the tip border of a centre ITO microelectrode, marked with A.
**Fig. 12** shows a first selected ITO microelectrode, designated B1, after electronical activation at +1800 mV (reference to silver electrode) with the protein resistant adlayer desorbed from said electrically conductive surface.
**Fig. 13** shows the array of Fig. 12, however with a second selected ITO microelectrode, designated B2, subsequently electronically activated at +1800 mV (reference to silver electrode) and the protein resistant adlayer desorbed from the electrically conductive surface of said second microelectrode as well.
**Fig. 14** shows the array of Figure 13, however with fluorescence-labeled streptavidin Rhodamin (wavelength 633nm) adsorbed on the formerly activated and desorbed microarrays (see C), recognizable by a stronger fluorescence signal on the electronically activated ITO microelectrodes when they are adsorbed with streptavidin Rhodamin 633 (clearer regions designated C), compared to PLL-g-PEG/633.
**Fig. 15** shows the array of Figure 14 after exposure to biotinylated fluorescence-labeled vesicles, 1,2-Dioleoyl-sn-Glycero-3-Phosphocholine (DOPC) (wavelength 488nm). Since the biotinylated fluorescence-labeled vesicles have a strong binding affinity to streptavidin, the ITO regions that were adsorbed with streptavidin revealed a green fluorescence signal (clear regions designated D).

The method of the present invention that is suitable for electrochemically patterning a microelectrode array (MEA) platform with at least two different kinds of macromolecules, comprises the steps of
a) providing a platform with a platform surface that comprises at least first and second independently addressable conductive microelectrodes such that said platform surface can selectively be electrically polarized, whereby the at least one first independently addressable conductive microelectrode is intended for the selective adsorption of a first kind of macromolecules on its surface and the at least one second independently addressable conductive microelectrode is intended for the selective adsorption of a second kind of macromolecules on its surface,
b) providing said platform surface with an adlayer of DNA-resistant and/or vesicles-resistant and/or carbohydrate-resistant and/or protein-resistant polymer, that optionally may be (end-)functionalized, in particular with a passive adlayer of optionally (end-functionalized protein-resistant polymer, said adlayer being designed to be selectively desorbed from a conductive microelectrode surface when said conductive microelectrode surface is subjected to a specific voltage,
c) generating at least one desorbed surface by selectively desorbing said adlayer from at least one of said conductive microelectrode surfaces to be provided with a first kind of macromolecule, said desorption being performed by applying a desorption voltage to said conductive microelectrode surfaces,
d) subjecting said desorbed surfaces to said first macromolecule under conditions such that said first macromolecule adsorbs to said desorbed surfaces, and
e) repeating steps c) and d) with a second or further kind of macromolecules until all kinds of macromolecules are adsorbed.

Steps c) and d) are repeated until all different kinds of final macromolecules are fixed to their specific areas, i.e. one area can be subjected to steps c) and d) more than once. In order to fix a broad variety of probes of interest, in particular a broad variety of proteins (including peptides) and/or vesicles, it may be necessary to use different types of adlayers. Different types of adlayers may also be necessary in case of mixed arrays comprising e.g. protein probes and DNA sequences (DNA-probes) and/or RNA sequences (RNA-probes). Thus, the term macromolecule as used herein also comprises such second or further area specifically applied adlayers that in subsequent steps c) and d) are replaced by a next adlayer or the final macromolecule, preferably a protein or vesicle. Said final macromolecules are also referred to as probes. The adlayers as well as the macromolecules may be fluorescent labeled thereby allowing to determine the surface area onto which the respective adlayer or macromolecule has been adsorbed and optionally also the density of the adsorbed layer.

The adlayer of DNA-resistant and/or vesicles-resistant and/or carbohydrate-resistant and/or protein-resistant polymer is below referred to as "resistant polymer", in all embodiments, however, the resistant polymer preferably is a protein-resistant polymer; i.e. a polymer that is not released due to a protein added. In preferred embodiments, the adlayer is a passive adlayer. However, for specific applications, the adlayer may be (end-)functionalized, be it to improve its (water) solubility, to "direct" the targets towards the probes and/or to provide information on a specific interaction. In the case of desired interactions, preferred functional groups are selected from hydroxy (-OH), carboxy (-COOH), ester (-COOR), thiol (-SH), N-hydroxy-succinimidyl, maleimidyl, vinylsulfone, biotin, nitrilo triacetic acid, peptide or other reactive groups that are suited for further functionalization with biospecific molecular moieties, and combinations thereof. With regard to adlayers end-functionalization with an end standing functional group only is much preferred.

The method of the present invention is suitable for fixing quite different and/or similar macromolecules.

The designation "conductive microelectrode surface" is used synonymous to the designation "surface of an electronically conductive microelectrode" thereby including embodiments, wherein the surface of the conductive microelectrode itself is of a non-conductive material but not sufficiently isolating to (fully) suppress the effect on the surface of a potential applied to the electrode. Thus, also embodiments wherein the conductive surface is e.g. provided with an attachment improving layer are comprised.

The adlayer of resistant polymer usually is an optionally fluorescent-marked polymer with a backbone provided with surface adsorbing groups on the one hand and hydrophilic groups on the other hand. A presently preferred protein-resistant adlayer polymer is poly(L-lysine)-grafted-poly(ethylene glycol) (PLL-*g*-PEG) . Other suitable surface adsorbing groups than the amino group of the poly(L-lysine) are any polar or charged groups such as carboxylate, sulfate, sulfonate phosphate, phosphonate, borate, boronate, protonated imine, primary, secondary amine and quaternary amine, pyridinium, imidazolium etc.

A preferred platform comprises microelectrodes selected from the group comprising titanium, gold, niobium, stainless steel, vanadium, platinum, rhodium, iridium, aluminium, silver, indium oxide, tin oxide, doped silicon or conductive polymers and in particular indium tin oxide (ITO), said microelectrodes being separated by insulating layers selected from the group comprising metal oxides (e.g.titanium oxide, niobium oxide, aluminium oxide, zirconium oxide, tantalum oxide, glass etc.), nitrides (e.g. silicon nitride, titanium nitride, zirconium nitride etc.), insulating polymers (e.g. polycarbonate, SU-8, etc.), and in particular SiO₂. Presently much preferred, the microelectrodes are of indium tin oxide (ITO) and the isolations of SiO₂. The advantage of such a platform is its transparency enabling not only investigation from the probe side but also from the platform side. Further possible, although not preferred microelectrode materials comprise copper, cobalt, iron and iron based alloys other than steel, nickel, palladium, tantalum and tungsten.

The adherence of the macromolecules to the surface can be improved by surface treatment, e.g. corona treatment, or by adsorption of a linker molecule comprising a surface attaching group or area and a linking group or area for establishing an improved adherence of the macromolecule, in particular the probe, to the platform.

In particular for PLL-*g*-PEG adsorbed on ITO a selective electrical polarization with reference to a silver electrode of about +1800 mV has proofed satisfactory. However, in general and in particular if other materials than PLL-*g*-PEG and ITO are concerned, the selective electrical polarization can be in the range of-2500mV to +2500mV, in particular of -100mV to +1800mV.

While the macromolecules adsorbed to the desorbed surface may be molecules forming a second (intermediate) adlayer with other desorption characteristics than the first adlayer, it is preferred that the macromolecules are probes of interest, in particular proteins and/or vesicles, i.e. that such intermediate adlayer is finally replaced by probes. For many applications it is desired that such probes are labeled, in particular fluorescent labeled. In other applications, e.g. if the adsorption of labeled substances shall be determined, it may be preferable to have non-labeled probes or fluorescence quenchingly or fluorescence activatingly labeled probes. Dependent on the interactions to be investi-gated/found, the probes may be functionalized, in particular end-functionalized. While in general it will be easier to add a probe/adlayer with the desired final functionalization, it is within the scope of the present invention to attach a precursor of the final probe or adlayer, said precursor carrying a reactive group allowing selective reaction and thus functionalization.

In addition, due to the specific method, the present invention enables the easy manufacturing of a microarray comprising a platform surface that comprises at least two different kinds of areas each of said areas selectively comprising at least one and preferably one specific kind of probes of interest, in particular probes of interest selected from proteins and/or vesicles, but also carbohydrates, whole cells or cell parts. Also possible are mixed arrays comprising at least one of proteins vesicles, carbohydrates, whole cells and/or cell parts together with other macromolecules, e.g. proteins (including peptides) and DNA and/or RNA sequences. It is also possible to use this method for the production of a nucleic acid array. However, for pure nucleic acid arrays the use of an adlayer in general is not needed. However, by the method of the present invention, where usually the adlayer remains on parts of the chip, the chip may be provided with further features due to the use of a specific adlayer or a specific functionalization of such adlayer.

In particular if produced according to the method of the present invention, and if not (yet) disconnected from any voltage supplying/regulating device, each kind of areas corresponds to one set of commonly addressable conductive microelectrode surfaces.

If an adlayer is used in the scope of the production of the microarray, said adlayer will usually still be present at least on the isolating surface areas unless specific removal methods are applied. However, such removal in general is not necessary and thus a less desired further step. Preferred adlayers are as defined above.

For making a protein microarray with an ITO/SiO₂ platform and a PLL-*g*-PEG adlayer, suitable production parameters in general are:

Adsorption of PLL-*g*-PEG can be performed using an aqueous solution with a concentration of 0.01mg/ml to 10mg/ml, in particular about 0.1mg/ml. Suitable adsorption parameters are a temperature in the range of 20°C to 90°C, in particular room temperature, a contact time of 10 to 120 minutes, in particular about 30 minutes, and an open circuit potential.

Desorption of the PLL-*g*-PEG can be performed by an external electrical polarization of +500mV to +5000mV, in particular about +1800mV (reference to silver electrode) for a time of 1 to 3600 seconds, in particular about 60 seconds at a temperature of 20 to 90°C, in particular room temperature.

A microarray of the present invention can comprise mounted electrodes, e.g. a mounted silver or silver chloride reference electrode and a platinum coun-ter electrode.

Also within the scope of the present invention is a flow cell, in particular a flow cell comprising a microarray of the present invention, said flow cell further comprising an inlet port for adding a sample and an outlet port for removing said sample. In addition the flow cell may comprise a heating device and/or a fluorescence detecting system, and/or a detecting system suitable for the electronic, acoustic, mechanical or optical measurement of surface processes.

### EXPERIMENTAL PART

### Materials and methods

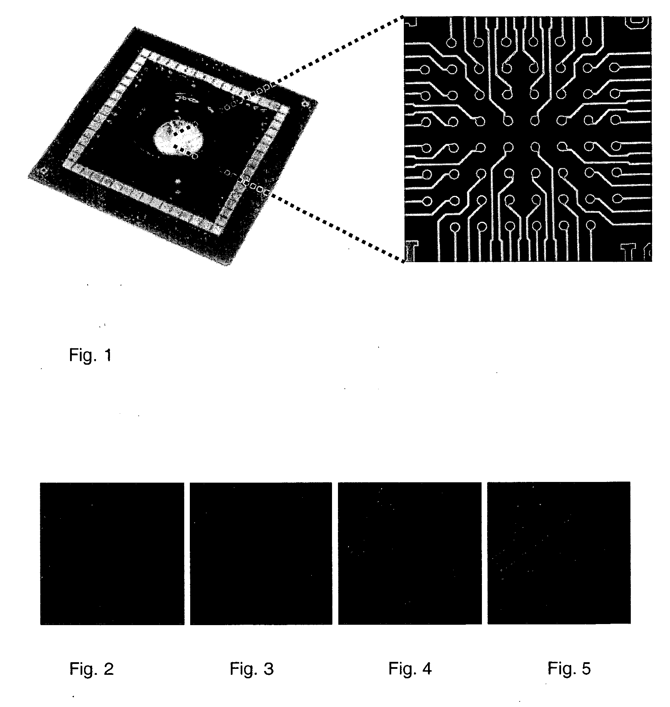

A three-electrodes configuration was adopted for the standard electrochemical cell set-up: reference and counter electrodes were 2 mm diameter 99.9% pure annealed silver and 0.5 mm diameter 99.95% pure platinum (Johnson Matthey & Brandenberger AG, Switzerland), respectively, while the working electrodes consisted of 60 indium tin oxide (ITO) microelectrodes with 40 µm diameter, i.e. a microelectrode array, obtained from Ayanda Biosystems S.A., Switzerland (see Fig. 1). All the microarrays were cleaned within an oxygen-plasma cleaner (PDC-32G, Harrick, USA) for 2 min.

An electrochemical flow cell was fabricated from poly(ether ether ketone) (PEEK) with an inlet and outlet flow channel and a working chamber of 60 µl volume. The multi-channel control unit was purchased from Multi Channel Systems GmbH, Germany and subsequently modified to fit the electrochemical flow cell.

The protein-resistant polymer, PLL(20)-g[2.9]-PEG(2) was synthesized using a poly(L-lysine) backbone of 20 kDa molecular weight, a grafting ratio of lysine-mer/PEG side-chain of 2.9 and poly(ethylene glycol) side chains of 2 kDa molecular weight. The polymer is then fluorescent-labeled with Alexa 633 (Molecular Probes, USA). The fluorescence-labeled polymer, PLL-*g-*PEG/633 was subsequently assembled onto the surfaces by dipping in an aqueous solution at a polymer concentration of 1mg/ml.

All experiments were conducted using 10 mM 4-(2-hydroxyethyl) piperazine-1- ethanesulfonic acid (HEPES) as a buffer solution supplemented by 150 mM NaCl. The HEPES solution was adjusted to pH 7.4 using NaOH. All aqueous solutions were prepared using ultra-pure water filtered through Milli-Q Gradient A10 filters, purchased from Millipore AG, Switzerland. The TOC of the high purity water was below 3 ppb.

Fluorescence microscopy was conducted using a Zeiss Axiovert 100M, Germany inverted microscope stage fitted with a 20 X 0.6 NA LD-Acroplan objective, the LSM510 scanning module (488 nm and 633 nm excitation) and a potentiostat (Model 2053, Amel Instrument, Italy). In the specific apparatus used, the potentiostat was wired to an electronic multi-channel control unit and an electrochemical flowcell which was located on the confocal fluorescence microscope. The samples were kept hydrated at all times throughout the fluorescence microscopy measurements by means of an electrochemical flowcell. Data analysis was performed using Zeiss LSM Image Browser 3.0.

### Example 1: Passivation and electronic activation of microelectrode array

PLL-g-PEG/633 solution was adsorbed in the flow cell onto the microelectrode array platform at an open circuit potential for 60 min. Figure 2 is a confocal image showing the uniform adsorption of the fluorescence-labeled PLL-g-PEG/633 onto the surface of the microelectrode array at open circuit potential. The microelectrodes are slightly darker in comparison to the surrounding silicon oxide region, primarily due to the quenching effects of the ITO. A photo-bleached region on an unad-dressed PLL-g-PEG/633 coated microelectrode revealed the background signal of the underlying platform.

By applying an external electric field of +1800 mV (reference to a silver electrode) on the individually selected ITO microelectrode(s), the loss of fluorescence signal on it(them) could be shown to be within less than 60 seconds (Figures 2 to 5). The loss of the fluorescence signal is due to the electrochemical desorption of the protein-resistant polymer adlayer from the ITO microelectrodes. The surrounding background fluorescence signal is not affected. The loss of the fluorescence signal obtained by desorption is similar to that of a photo-bleached region indicating a complete removal of the polymeric adlayer.

### Example 2: Selective surface functionalization with fluorescence-labeled polymer, poly(L-lysine)-grafted-poly(ethylene glycol) (PLL-g-PEG/488)

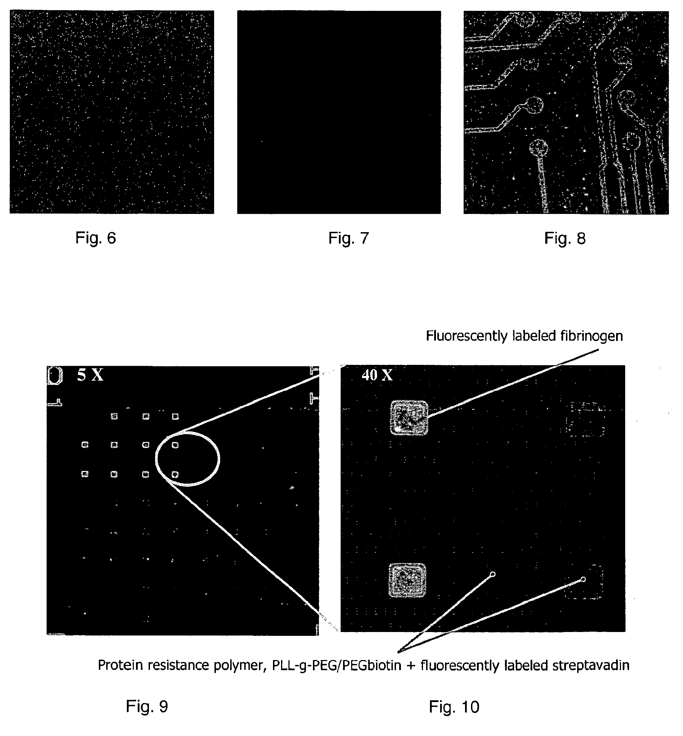

The microelectrode array is uniformly exposed to PLL-g-PEG/633 at open circuit potential for 60 min and rinsed with HEPES 2 solution (see Fig. 6). Then the protein-resistant adlayer is completely removed from the surface of selected ITO microelectrodes by an external electrical polarization at +1800 mV (reference to silver electrode) applied to them (see dark electrodes in Fig.7). Afterwards, the microelectrode array is exposed to PLL-g-PEG/488 for 60 min which covered the bare and electronically activated ITO (see clear electrodes in Fig. 8).

### Example 3: Selective surface functionalization with fluorescent-labeled proteins

As adlayer the biotinylated polymer, PLL-g-PEG/PEGbiotin was adsorbed on the microelectrode array as a backfill. By applying a voltage of +1800 mV (reference to silver electrode) the protein resistant polymer could be removed from a selected region of microelectrodes. The microelectrode array was then exposed to fluorescent-labeled human fibrinogen which was found to adsorb specifically onto the electronically activated ITO microelectrodes (clear spots in the confocal microscopy images, Figures 9 and 10). The protein resistant backfill prevented non-specific adsorption of the fibrinogen onto the surrounding region. Then fluorescent-labeled streptavidin which has a strong binding affinity to biotin was introduced into the microelectrode array which resulted in adsorbance of fluorescent-labeled streptavidin over the whole surface still functionalized with PLL-g-PEG/PEGbiotin, i.e. the whole surface except for the fluorescent-labeled human fibrinogen covered spots( see also Figures 9 and 10).

### Example 4: Selective surface functionalization with fluorescent-labeled vesicles

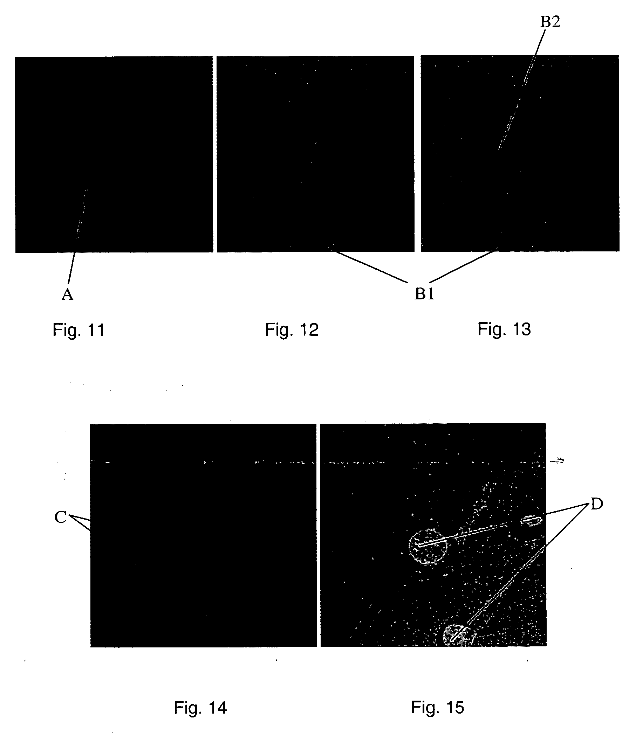

PLL-g-PEG/633 was adsorbed onto a microelectrode array as described above for 60 min and then rinsed with HEPES 2 solutions. Photo bleaching was conducted near the tip border of a centre ITO microelectrode (see A in Fig. 11). In a next step two selected ITO microelectrodes were one after the other electronically activated at +1800 mV (reference to silver electrode) to desorb the protein resistant adlayer from the electrically conductive surfaces (see B1 and B2 in Fig. 12 and 13). Then fluorescence-labeled streptavidin Rhodamin (wavelength 633nm) was exposed to the microelectrode array for 20 min and then the flowcell was rinsed with HEPES 2 solutions. On the electronically activated ITO microelectrodes a stronger fluorescence signal was detected when they were adsorbed with streptavidin Rhodamin 633, compared to PLL-g-PEG/633 (see C in Fig. 14). In a next step, biotinylated fluorescence-labeled vesicles, 1,2-Dioleoyl-sn-Glycero-3-Phosphocholine (DOPC) (wavelength 488nm) were introduced into the electrochemical flow cell for 40 min and then the flowcell was rinsed with HEPES 2 solutions. Since the biotinylated fluorescence-labeled vesicles have a strong binding affinity to streptavidin, the ITO regions that were adsorbed with streptavidin showed a green fluorescence signal (see D in Fig. 15).

The microarrays of the present invention are especially useful in the investigation of the following interactions: DNA-DNA, DNA-protein, protein-protein, membrane protein-ion, protein-drug, sugar-protein, cell-protein, bacteria-protein, cell-cell, membrane-protein, membrane-virus, protein-virus etc.

Thus, the microarrays of the present invention can be used as analytical tools for investigating diseases and/or infections such as cancer and/or for the discovery of novel drugs.

### References

Mirzabekov A, Kolchinsky A. 2002. Emerging array-based technologies in proteomics. Current Opinion in Chemical Biology 6(1):70-75.

Swanson P, Gelbart R, Atlas E, Yang L, Grogan T, Butler WF, Ackley DE, Sheldon E. 2000. A fully multiplexed CMOS biochip for DNA analysis. Sensors and Actuators B: Chemical 64(1-3):22-30.

Templin MF, Stoll D, Schrenk M, Traub PC, Vo-hringer CF, Joos TO. 2002. Protein microarray technology. Trends in Biotechnology 20(4):160-166.

## Claims

1. A method for electrochemically patterning a microelectrode array (MEA) platform with at least two different kinds of macromolecules, comprising
a) providing a platform with a platform surface that comprises at least first and second individually addressable conductive microelectrode surfaces such that said platform surface can selectively be electrically polarized, in particular an integrated circuit comprising chip, whereby the at least one first independently addressable conductive microelectrode is intended for the selective adsorption of a first kind of macromolecules on its surface and the at least one second independently addressable conductive microelectrode surface is intended for the selective adsorption of a second kind of macromolecules on its surface,
b) providing said platform surface with an adlayer of a resistant polymer, said polymer being a DNA-resistant and/or vesicles-resistant and/or carbohydrate resistant and/or protein-resistant polymer, in particular an adlayer of protein-resistant polymer, designed to be selectively desorbed from a conductive microelectrode surface when said conductive microelectrode surface is subjected to a specific voltage,
c) generating at least one desorbed surface by selectively desorbing said adlayer from at least one of said conductive microelectrode surfaces to be provided with a first kind of macromolecule, said desorption being performed by applying a desorption voltage to said conductive microelectrode surfaces,
d) subjecting said desorbed surfaces to said first macromolecule under conditions such that said first macromolecule adsorbs to said desorbed surfaces, and
e) repeating steps c) and d) with a second or further kind of macromolecules until all kinds of macromolecules are adsorbed.

2. The method of claim 1 wherein the resistant polymer of the adlayer is an optionally fluorescent-marked polymer with a backbone provided with surface adsorbing groups on the one hand and hydrophilic groups on the other hand.

3. The method of claim 2, wherein the resistant polymer is a protein-resistant polymer, in particular poly(L-lysine)-grafted-poly(ethylene glycol) (PLL-g-PEG) .

4. The method of anyone of the preceding claims wherein the resistant polymer is end-functionalized.

5. The method of anyone of the preceding claims wherein the platform comprises microelectrodes selected from the group consisting of titanium, aluminium, gold, silver, platinum, rhodium, iridium, stainless steel, niobium, indium oxide, tin oxide, indium tin oxide, doped silica, and conductive polymers, separated by insulating layers selected from the group consisting of silicon oxide, titanium oxide, aluminium oxide, niobium oxide, zirconium oxide, tantalum oxide, glass, silicon nitride, titanium nitride, zirconium nitride, and insulating polymers.

6. The method of anyone of the preceding claims, wherein the microelectrodes are indium tin oxide (ITO) microelectrodes.

7. The method of anyone of the preceding claims, wherein the isolation between the microelectrodes is a SiO₂ isolation.

8. The method of anyone of the preceding claims, wherein the selective electrical polarization with reference to a silver electrode is in the range of about -2500mV to about +2500mV, in particular about +1800mV

9. The method of anyone of the preceding claims, wherein the macromolecules are probes of interest.

10. The method of anyone of the preceding claims, wherein the probes of interest are selected from the group consisting of proteins, DNA/RNA, carbohydrates, vesicles, cells, cell parts and combinations thereof, in particular probes of interest selected from the group consisting of proteins, carbohydrates, vesicles, cells and combinations thereof, more preferred proteins and/or vesicles.

11. The method of anyone of the preceding claims, wherein the macromolecules, in particular the probes, are fluorescent-labeled or functionalized (carry functional groups).

12. The method of claim 11, wherein the macromolecules, in particular the probes carry at least one of the following functional groups: hydroxy (-OH), carboxy (-COOH), ester (-COOR), thiol (-SH), N-hydroxy-succinimidyl, maleimidyl, vinylsulfone, biotin, nitrilo triacetic acid, peptide or other reactive groups that are suited for further functionalization with biospecific molecular moieties, and combinations thereof.

13. A microarray comprising a platform surface that comprises at least two different kinds of areas wherein each kind of area selectively comprises at least one and preferably one specific kind of probes of interest.

14. The microarray of claim 13, wherein each kind of areas corresponds to one set of independently addressable conductive microelectrode surfaces.

15. The microarray of claim 13 or 14, wherein the probes of interest are selected from the group consisting of proteins, DNA/RNA, carbohydrates, vesicles, cells, cell parts and combinations thereof, in particular probes of interest selected from the group consisting of proteins, carbohydrates, vesicles, cells and combinations thereof, more preferred proteins and/or vesicles..

16. The microarray of anyone of claims 13 to 15, wherein the space between probes comprising areas is filled with an adlayer of an optionally fluorescent-marked and/or optionally end-functionalized resistant polymer.

17. The microarray of claim 16, wherein said resistant polymer is a polymer with a backbone provided with surface adsorbing groups on the one hand and hydrophilic groups on the other hand.

18. The microarray of claim 17, wherein said resistant polymer is a protein-resistant polymer, in particular poly(L-lysine)-grafted-poly(ethylene glycol) (PLL-g-PEG).

19. A microarray, in particular according to anyone of claims 13 to 18, that is obtainable by the method of anyone of claims 1 to 11.

20. The microarray of anyone of claims 13 to 19, comprising a mounted silver or silver chloride reference electrode and a platinum counter electrode.

21. A flow cell comprising a microarray of anyone of claims 13 to 20, said flow cell further comprising an inlet port for adding a sample and an outlet port for removing said sample.

22. The flow cell of claim 21, said flow cell further comprising a heating device and/or a fluorescence detecting system, and/or a detecting system suitable for the electronic, acoustic, mechanical or optical measurement of surface processes.
